# EUROPÄISCHE PATENTSCHRIFT

(11) **EP 2 707 431 B1**
(45) Veröffentlichungstag und Bekanntmachung des Hinweises auf die Patenterteilung: **17.08.2016**
(21) Anmeldenummer: 12719387.8
(22) Anmeldetag: 09.05.2012
(51) Int. Cl.: C08L 77/02, C08L 77/06, C08K 5/5399

(54) **FLAMMGESCHÜTZTE THERMOPLASTISCHE FORMMASSE**
FLAME-RETARDANT THERMOPLASTIC MOLDING COMPOSITION
MATIÈRE À MOULER THERMOPLASTIQUE IGNIFUGE

(30) Priorität: 10.05.2011 EP 11165454
(43) Veröffentlichungstag der Anmeldung: 19.03.2014
(73) Patentinhaber: BASF SE, 67056 Ludwigshafen am Rhein (DE)
(72) Erfinder: KÖNIG, Alexander, 76646 Bruchsal (DE)
(86) Internationale Anmeldenummer: PCT/EP2012/058479
(87) Internationale Veröffentlichungsnummer: WO 2012/152805

(56) Entgegenhaltungen:
- WO-A1-2010/087193
- Anonymous: "Exolit Overview", , 1. November 2008 (2008-11-01), Seiten 1-8, XP55029811, Gefunden im Internet: URL:http://www.clariant.com/C125720D002B96 3C/D9E011C652301193C125728100597A07/$FILE/ DA4002E_1108_BR_ExolitOverview.pdf [gefunden am 2012-06-13]

## Beschreibung

Die Erfindung betrifft eine flammgeschützte thermoplastische Formmasse auf Basis von aliphatischen Polyamiden, Verfahren zu ihrer Herstellung und ihre Verwendung zur Herstellung von Formkörpern, Fasern oder Folien, sowie daraus hergestellte Formkörper, Fasern oder Folien.

Der Einsatz von cyclischen Phenoxyphosphazenen in flammgeschützten Polyamidharz-Zusammensetzungen ist aus dem Stand der Technik bekannt. Die EP-A-2 100 919 betrifft flammgeschützte Polyamidharze, die neben einem Polyamidharz einen Phosphor enthaltenden, flammhemmenden Stoff und Glasfasern enthalten. Die phosphorhaltige Substanz kann ausgewählt sein aus Reaktionsprodukten von Melamin mit Phosphorsäure, aus (Di)phosphinatsalzen sowie Phosphazen-Verbindungen, insbesondere cyclischen Phenoxyphosphazen-Verbindungen. Die Beispiele zeigen den Einsatz von Phenoxyphosphazenen oder alternativ von Mischungen aus Melaminpolyphosphat und Aluminiumethylmethylphosphinat in Polyamid, das überwiegend MXD6 enthält.

Die US-A-2010/0261818 betrifft halogenfreie, flammhemmende Polyamid-Zusammensetzungen, die in elektrischen Anwendungen eingesetzt werden können. Die Polyamidharze enthalten ein Phosphinat, ein Phosphazen und wahlweise eine flammhemmende synergistische Verbindung, ausgewählt aus speziellen Oxiden. Als cyclische Phosphazene können beispielsweise Phenoxyphosphazene eingesetzt werden.

WO 2010/087193 A1 offenbart eine glasfaserverstärkte Polyamidharzzusammensetzung, die durch Schmelzen und Kneten einer Mischung erhalten wird, wobei 30-70 Gewichtsteile Glasfaserbündel (C), die aus Glasfasern mit flachem Querschnitt und einem Ebenheitsgrad von 1,5-8 und einem Glühverlust bei 625°C für 0,5 Stunden von nicht mehr als 0,8 Gew.-% bestehen, zu 25-50 Gewichtsteilen eines Polyamidharzes (A) und 2-20 Gewichtsteilen eines phosphorhaltigen Flammschutzmittels (B), was nicht roter Phosphor ist, hinzugefügt werden.

Die flammhemmende Wirkung der vorbekannten flammgeschützten Polyamid-Zusammensetzungen ist noch nicht für alle Anwendungen ausreichend. insbesondere erfüllen die Formmassen nicht die V0 der UL94 für Probenkörper mit einer Probendicke von 0,4 mm, speziell nach Lagerung bei erhöhten Temperaturen.

Aufgabe der vorliegenden Erfindung ist die Bereitstellung von flammhemmenden, Polyamide enthaltenden, thermoplastischen Formmassen, die gegenüber vorbekannten Formmassen eine verbesserte Brandschutz-Klassifizierung, insbesondere nach Lagerung bei erhöhten Temperaturen, aufweisen.

Die Aufgabe wird erfindungsgemäß gelöst durch eine thermoplastische Formmasse, bestehend neue Seite aus
a) 45 bis 87 Gew.-% mindestens eines aliphatischen Polyamids oder Copolyamids als Komponente A,
b) 2 bis 10 Gew.-% mindestens eines cyclischen Phenoxyphosphazens mit mindestens 3 Phenoxyphosphazen-Einheiten als Komponente B,
c) 8 bis 17 Gew.-% mindestens eines (Di)phosphinatsalzes als Komponente C,
d) 1 bis 15 Gew.-% Melaminpolyphosphat als Komponente D,
e) 0,1 bis 5 Gew.-% Zinkborat als Komponente E,
f) 0 bis 20 Gew.-% mindestens eines Schlagzäh-modifizierenden Polymers als Komponente F,
g) 0 bis 50 Gew.-% Glasfasern als Komponente G,
h) 0 bis 30 Gew.-% weitere Zusatzstoffe als Komponente H,
wobei die Gesamtmenge der Komponenten A bis F 100 Gew.-% ergibt.

Es wurde erfindungsgemäß gefunden, dass die Kombination mindestens eines cyclischen Phenoxyphosphazens mit mindestens drei Phenoxyphosphazen-Einheiten, mindestens eines (Di)phosphinatsalzes und mindestens eines Umsetzungsproduktes von Melamin mit einer Phosphorsäure in speziellen Mengenverhältnissen zu einer verbesserten Brandschutz-Klassifizierung von damit ausgerüsteten Polyamid-Zusammensetzungen führt, insbesondere nach Lagerung bei erhöhten Temperaturen. Die verbesserte Brandschutz-Klassifizierung tritt insbesondere in der UL 94 für Probenkörper mit einer Probendicke von 0,4 mm auf. Es wird die V0 der UL 94 für Probenkörper mit einer Dicke von 0,4 mm erfüllt, insbesondere nach Lagerung für 7 Tage bei 70 °C.

Dieser Effekt tritt einerseits beim Vergleich der erfindungsgemäßen Formmassen mit bekannten Formmassen auf, die nur (Di)phosphinatsalz und Melaminpolyphosphat, aber kein cyclisches Phenoxyphosphazen enthalten, auf. Noch stärker ist der Effekt gegenüber Formmassen, die ein (Di)phosphinatsalz und ein cyclisches Phenoxyphosphazen enthalten, aber kein Melaminpolyphosphat.

Damit kann die flammhemmende Wirkung der Polyamid-Zusammensetzung durch eine Kombination der vorstehenden Komponenten B, C und D deutlich verbessert werden.

Die einzelnen Komponenten der thermoplastischen Formmasse werden nachfolgend beschrieben.

### Komponente A

Als Komponente A werden 45 bis 87 Gew.-%, insbesondere 55 bis 80,3 Gew.-% mindestens eines aliphatischen Polyamids oder Copolyamids eingesetzt.

Die Mindestmenge kann gemäß einer Ausführungsform der Erfindung 46 Gew.-% betragen. Die Höchstmenge liegt beim Vorliegen der Komponente E in den unten angegebenen Mengen bei 86,8 Ges.-%, insbesondere 79,8 Gew.-%. Diese Werte ergeben sich, indem die Mindestmengen der Komponenten B bis E bei deren Vorliegen mit der Höchstmenge der Komponente A 100 Gew.-% ergeben.

Die erfindungsgemäß eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen aliphatischen Polyamiden handeln. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem, teilkristallinen sowie amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 gew.-%-iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure und Dodecandisäure (= Decandicarbonsäure) als Säuren genannt.

Als Diamine eignen sich besonders Alkandiamine mit 2 bis 12, insbesondere 6 bis 8 Kohlenstoffatomen sowie Di- (4-aminocyclohexyl)-methan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Die nachfolgende, nicht abschließende Aufstellung enthält die genannten, sowie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA 4 (Pyrrolidon)
PA 6 (ε-Caprolactam)
PA 7 (Ethanolactam)
PA 8 (Capryllactam)
PA 9 (9-Aminononansäure)
PA11 (11-Aminoundecansäure)
PA12 (Laurinlactam)

Diese Polyamide und ihre Herstellung sind bekannt. Einzelheiten zu ihrer Herstellung findet der Fachmann in Ullmanns Enzyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6 oder Polyamid-66 eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um
verzweigend wirkende Monomere, die z. B. mindestens drei Carboxyl- oder Aminogruppen aufweisen,
Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,
oder um Polymerblöcke, die zur Anbindung an Carboxyl- oder Aminogruppen befähigt sind.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

### Komponente B

Als Komponente B werden 2 (oder 3) bis 10 Gew.-%, insbesondere 2,5 (oder 3,5) bis 7,5 Gew.-%, beispielsweise 4 bis 7,5 Gew.-%, mindestens eines cyclischen Phenoxyphosphazens mit mindestens drei Phenoxyphosphazen-Einheiten eingesetzt. Entsprechende Phenoxyphosphazene sind beispielsweise in US 2010/0261818 in den Absätzen [0051] bis [0053] beschrieben. Es kann insbesondere auf die Formel (I) verwiesen werden. Ferner sind entsprechende cyclische Phenoxyphosphazene in EP-A-2 100 919 beschrieben, dort insbesondere in den Absätzen [0034] bis [0038]. Die Herstellung kann erfolgen, wie in EP-A-2 100 919 in Absatz [0041] beschrieben. Gemäß einer Ausführungsform der Erfindung können die Phenylgruppen im cyclischen Phenoxyphosphazen durch C₁₋₄-Alkylreste substituiert sein. Bevorzugt handelt es sich um reine Phenylreste. Für eine weitere Beschreibung der cyclischen Phosphazene kann auf Römpp Chemie-Lexikon, 9. Aufl., Stichwort "Phosphazene" verwiesen werden. Die Herstellung erfolgt beispielsweise über Cyclophosphazen, das aus PCl₅ und NH₄Cl erhältlich ist, wobei die Chlorgruppen im Cyclophosphazen durch Umsetzung mit Phenol durch Phenoxygruppen ersetzt sind.

Die cyclische Phenoxyphosphazen-Verbindung kann beispielsweise hergestellt werden wie in "Phosphorus-Nitrogen Compounds" (Academic Press, 1972), H. R. Allcock und "Inorganic Polymers" (Prentice Hall International, Inc., 1992), J. E. Mark, H. R. Allcock und R. West, beschrieben.

Vorzugsweise ist Komponente B ein Gemisch aus cyclischen Phenoxyphosphazenen mit drei und vier Phenoxyphosphazen-Einheiten. Dabei beträgt das Gewichtsverhältnis von drei Phenoxyphosphazen-Einheiten zu vier Phenoxyphosphazen-Einheiten enthaltenden Ringen vorzugsweise etwa 80:20. Größere Ringe der Phenoxyphosphazen-Einheiten können ebenfalls vorliegen, jedoch in geringen Mengen. Geeignete cyclische Phenoxyphosphazene sind von Fushimi Pharmaceutical Co., Ltd., unter der Bezeichnung Rabitle® FP-100 erhältlich. Es handelt sich um einen mattweißen/gelblichen Feststoff mit einem Schmelzpunkt von 110°C, einem Phosphorgehalt von 13,4 % und einem Stickstoffgehalt von 6,0 %. Der Anteil an drei Phenoxyphosphazen-Einheiten aufweisenden Ringen beträgt mindestens 80 Gew.-%.

### Komponente C

Als Komponente C werden 8 bis 17 Gew.-%, insbesondere 12,2 bis 14 Gew.-% mindestens eines (Di)phosphinatsalzes eingesetzt. Für eine Beschreibung geeigneter (Di)phosphinatsalze kann auf die EP-A-2 100 919 verwiesen werden, insbesondere die Absätze [0027] bis [0032].

Geeignete Phosphinatsalze weisen die allgemeine Formel [R¹R²P(=O)-O]⁻ₘMm⁺ auf. Geeignete (Di)phosphinate die allgemeine Formel [O-P(=O)R¹-O-R³-O-P(=O)R²-O]²⁻ₙMₓm⁺, wobei R¹ und R² unabhängig voneinander lineare oder verzweigte C₁₋₆-Alkylreste oder C₆₋₁₀-Arylreste bedeuten, R³ einen linearen oder verzweigten C₁₋₁₀-Alkylenrest, C₆₋₁₀-Arylenrest, C₇₋₁₀-Alkylarylenrest oder C₇₋₁₀-Arylalkylenrest bedeutet, M Ca, Mg, Al oder Zn bedeutet, m die M-Valenz bedeutet, bestimmt als 2n = mx, n den Wert 1 oder 3 bedeutet und x den Wert 1 oder 2 bedeutet. Sofern m oder n einen Wert von 2 oder mehr aufweisen, können die Reste R¹ bis R³ an jeder Position frei gewählt werden.

Beispiele geeigneter Phosphinsäuresalze sind Dimethylphosphinat, Ethylmethylphosphinat, Diethylphosphinat, Methyl-n-propylphosphinat, Methandi(methylphosphinat), Benzol-1,4-di(methylphosphinat), Methylphenyl-phosphinat und Diphenylphosphinat. Die Metallkomponente M ist ein Kalziumion, Magnesiumion, Aluminiumion oder Zinkion.

Geeignete Phosphinatsalze sind beispielsweise Kalziumdimethylphosphinat, Magnesiumdimethylphosphinat, Aluminiumdimethylphosphinat, Zinkdimethyl-phosphinat, Kalziumethylmethylphosphinat, Magnesiumethylmethylphosphinat, Alumiumethylmethylphosphinat, Zinkethylmethylphosphinat, Kalziumdiethylphosphinat, Magnesiumdiethylphosphinat, Aluminiumdiethylphosphinat, Zinkdiethylphosphinat, Kalziummethyl-n-propylphosphinat, Magnesiummethyl-npropylphosphinat, Aluminiummethyl-n-propylphosphinat, Zinkmethyl-n-propylphosphinat, Kalziummethylphenyl-phosphinat, Magnesiummethylphenylphosphinat, Aluminiummethylphenylphosphinat, Zinkmethylphenylphosphinat, Kalziumdiphenylphosphinat, Magnesiumdiphenylphospinat, Aluminiumdiphenylphosphinat und Zinkdiphenylphosphinat.

Beispiele geeigneter Diphospinatsalze sind Kalziummethandi(methylphosphinat), Magnesiummethandi(methylphosphinat), Aluminiummethandi(methylphosphinat), Zinkmethandi(methylphosphinat), Kalziumbenzol-1,4-di(methylphosphinat), Magnesiumbenzol-1,4-di(methylphosphinat), Aluminiumbenzol-1,4-di(methylphosphinat) und Zinkbenzol-1,4-di(methylphosphinat).

Besonders bevorzugt werden Phosphinatsalze eingesetzt, inbesondere Aluminiumethylmethylphosphinat, Aluminiumdiethylphosphinat und Zinkdiethylphosphinat. Besonders bevorzugt wird Aluminiumdiethylphosphinat eingesetzt.

Die (Di)phosphinatsalze können in beliebiger geeigneter Korngröße eingesetzt werden, siehe EP-A-2 100 919, Absatz [0032].

### Komponente D

Als Komponente D werden 1 bis 15 Gew.-%, vorzugsweise 3 bis 10 Gew.-%, insbesondere 5 bis 7 Gew.-% Melaminpolyphosphat eingesetzt. Für eine Beschreibung der Komponente D kann auf EP-A-2 100 919, Absätze [0024] bis [0026] verwiesen werden.

Besonders bevorzugt wird Melaminpolyphosphat eingesetzt, das durch Kondensation von Melaminphosphat durch Aufheizen unter Stickstoffatmosphäre erhalten werden kann. Melaminpolyphosphat weist die allgemeine Formel (C₃H₆N₆ HPO₃)ₙ auf.

Die Phosphorsäurekomponente im Melaminphosphat ist beispielsweise ortho-Phosphorsäure, phosphorige Säure, hypophosphorige Säure, Metaphosphorsäure, Pyrophosphorsäure, Triphosphorsäure oder Tetraphosphorsäure. Besonders bevorzugt ist ein Melaminpolyphosphat, das erhalten wird durch Kondensation eines Addukts von ortho-Phosphorsäure oder Pyrophosphorsäure mit Melamin. Der Kondensationsgrad des Melaminpolyphosphats ist vorzugsweise 5 oder größer. Das Melaminpolyphosphat kann alternativ auch ein äquimolares Additionssalz von Polyphosphorsäuren mit Melamin sein. Neben kettenförmiger Polyphosphorsäure kann auch cyclische Polymetaphosphorsäure eingesetzt werden. Das Additionssalz von Melaminpolyphosphat ist in der Regel ein Pulver, das erhalten wird durch Umsetzung einer wässrigen Aufschlämmung eines Gemisches von Melamin mit Polyphosphorsäure und nachfolgendes Abfiltrieren, Waschen und Trocknen. Die Korngröße des Melaminpolyphosphats kann in weiten Grenzen eingestellt werden, hierzu kann auch EP-A-2 100 919, Absatz [0026] verwiesen werden.

### Komponente E

Als Komponente E wird Zinkborat eingesetzt. Die Mindestmenge beträgt 0,1 Gew.-%, vorzugsweise 0,2 Gew.-%, insbesondere 0,5 Gew.-%. Die maximal mögliche Menge des Polyamids der Komponente A verringert sich beim Vorliegen des Zinkborats entsprechend, so dass die Gesamtmenge der Komponenten A bis H 100 Ges.-% ergibt.

Die Komponenten B bis E können in den vorstehend angegebenen Mengen eingesetzt werden. Bevorzugt beträgt die Gesamtmenge der Komponenten B bis E, bezogen auf die thermoplastische Formmasse, 5 bis 50 Ges.-%, vorzugsweise 10 bis 40 Gew.-%, insbesondere 20 bis 30 Gew.-%.

Erfindungsgemäß besonders bevorzugt ist die Kombination von Cyclophosphazen mit 3 oder 4 Phenoxyphosphazeneinheiten mit Aluminiumdiethylphosphinat, Melaminpolyphosphat und, soweit vorliegend, Zinkborat als Flammschutzmittel-System. Diese spezifische Kombination führt insbesondere zu den erfindungsgemäßen Vorteilen des verbesserten Brandverhaltens, insbesondere der Einordnung V0 nach UL94 für Probenkörperdicken von 0,4 mm, speziell nach Lagerung bei 70 °C für 7 Tage.

### Komponente F

Als Komponente F werden 0 bis 20 Gew.-%., vorzugsweise 0 bis 10 Gew.-%, insbesondere 0 bis 8 Gew.-%, mindestens eines Schlagzäh-modifizierenden Polymers eingesetzt. Sofern ein Schlagzäh-modifizierendes Polymer vorliegt, beträgt die Mindestmenge 0,1 Gew.-%, vorzugsweise 1 Gew.-%, insbesondere 3 Gew.-%. Die maximal mögliche Menge der Komponente A verringert sich entsprechend, so dass die Gesamtmenge der Komponenten A bis H 100 Gew.-% ergibt. Die Komponente F muss nicht mitverwendet werden, ihr Einsatz kann aber zu einer verbesserten Schlagzähfähigkeit der erhaltenen Polyamidformmassen führen. Es handelt sich dabei um Schlagzäh-modifizierende Polymere, mit denen die Polyamide der Komponente A typischerweise schlagzäh ausgerüstet werden. Vorzugsweise handelt es sich um ein Elastomer, beispielsweise um natürliche oder synthetische Kautschuke oder andere Elastomere.

Als einsetzbare synthetische Kautschuke können Ethylen-Propylen-Dien-Kautschuk (EPDM), Styren-Butadien-Kautschuk (SBR), Butadien-Kautschuk (BR), Nitril-Kautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), StyrolButadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymere aus Ethylen und 1-Octen, 1-Buten oder Propylen, wie sie in der WO 2008/074687 beschrieben sind. Die Molekulargewichte derartiger Ethylen-α-Olefin-Copolymere liegt vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypropylen eingesetzt werden.

Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

Weitere als Komponente F geeignete Polymere sind in der EP-A-2 100 919 in Abschnitt [0044] genannt.

Besonders bevorzugt werden als Komponente F Copolymerisate von Ethylen und Acrylaten, Acrylsäure und/oder Maleinsäureanhydrid eingesetzt. Besonders bevorzugt werden Copolymere aus Ethylen, n-Butylacrylat, Acrylsäure und Maleinsäureanhydrid eingesetzt. Ein entsprechendes Copolymer ist unter der Bezeichnung Lupolen® KR1270 von der BASF SE erhältlich.

### Komponente G

Als Komponente G enthalten die thermoplastischen Formmassen 0 bis 50 Gew.-%, bei Vorliegen 1 bis 50 Gew.-%, vorzugsweise 10 bis 35 Gew.-%, insbesondere 20 bis 30 Gew.-%, beispielsweise etwa 25 Gew.-% Glasfasern. Dabei können beliebige geeignete Glasfasern als Schnittglas oder in Form von Rovings eingesetzt werden. Vorzugsweise weisen die Schnittglasfasern einen Durchmesser von etwa 10 µm auf. Die Glasfasern können oberflächenbehandelt sein, beispielsweise silanisiert. Besonders vorteilhaft ist die Mitverwendung der Glasfasern.

### Komponente H

Als Komponente H können die erfindungsgemäßen thermoplastischen Formmassen 0 bis 30 Gew.-% weitere Zusatzstoffe enthalten. Bei diesen Zusatzstoffen kann es sich um weitere Füllstoffe, Stabilisatoren, Oxidationsverzögerer, Mittel gegen Wärmezersetzung und Zersetzung durch ultraviolettes Licht, Flammschutzmittel, Gleit- und Entformungsmittel, Färbemittel wie Farbstoffe und Pigmente, Keimbildungsmittel, Weichmacher, usw., handeln. Für eine nähere Beschreibung möglicher Zusatzstoffe kann auf die WO 2008/074687, Seiten 31 bis 37, verwiesen werden.

Vorzugsweise liegen 0,1 bis 20 Gew.-% der Komponente H vor (die Menge der Komponente A verringert sich entsprechend), wobei Komponente H Stabilisatoren und Schmiermittel enthält. Beispielsweise kann Zinkoxid als Stabilisator eingesetzt werden, und Kalziumstearat kann als Schmiermittel eingesetzt werden. Übliche Antioxidantien für Polyamid-Formmassen können eingesetzt werden, beispielsweise die unter der Marke Irganox® vertriebenen Antioxidantien.

Als weitere Füllstoffe kommen Kohlenstoff-Fasern, aromatische Polyamid-Fasern und andere Füllstoffe wie Gipsfasern, synthetische Calziumsilikate, Kaolin, calziniertes Kaolin, Wollastonit, Talkum und Kreide in Betracht.

Neben den Flammschutzmitteln der Komponenten B bis E können auch weitere Flammschutzmittel als Zusatzstoffe der Komponente H mitverwendet werden, beispielsweise auf Basis von Triazinen, Metallhydraten und Silikonen. Ein typischer flammhemmender Stoff auf Basis von Triazinen ist Melamincyanurat.

Weitere Zusatz-flammhemmende Stoffe können Metallverbindungen wie Magnesiumhydroxid, Aluminiumhydroxid, Zinksulfat, Eisenoxid und Boroxid sein, siehe auch EP-A-2 100 919, Absätze [0046] bis [0048].

Weitere synergistisch wirkende, flammhemmende Stoffe sind beispielsweise in der US 2010/0261818 in den Abschnitten [0064] und [0065] genannt.

Gemäß einer Ausführungsform der Erfindung werden neben den Komponenten B bis E keine weiteren Flammschutzmittel eingesetzt.

Die Herstellung der erfindungsgemäßen Formmassen erfolgt durch Vermischen der Komponenten A bis H. Zweckmäßigerweise verwendet man hierzu Extruder, beispielsweise Einschnecken- oder Zweischnecken-Extruder, oder andere herkömmliche Plastifizierungsvorrichtungen wie Brabender-Mühlen oder Banbury-Mühlen.

Die Reihenfolge der Vermischung der einzelnen Komponenten kann dabei frei gewählt werden. Vorzugsweise wird eine Vormischung der Komponenten C, D und E eingesetzt.

Die erfindungsgemäßen Formmassen zeichnen sich durch eine verbesserte Flammhemmung insbesondere bei Probendicken von 0,4 mm und nach Lagerung aus. Sie eignen sich zur Herstellung von Formkörpern, Fasern oder Folien.

Die Erfindung betrifft auch entsprechende Formkörper, Fasern oder Folien aus der vorstehend beschriebenen thermoplastischen Formmasse.

Die Erfindung wird durch die nachstehenden Beispiele näher erläutert.

### Beispiele

Die folgenden Komponenten wurden in den erfindungsgemäßen Zusammensetzungen eingesetzt:
- Komponente A:: Polyamid-66 (Ultramid®A24 E der BASF SE)
- Komponente B:: Hexaphenoxy-Cyclophosphazen (Rabitle® FP 110 von Fushimi Co.)
- Komponente C/D/E:: Mischung aus 12,7 Gew.-% Aluminiumdiethylphosphinat, 6,3 Gew.-% Melaminpolyphosphat und 1 Gew.-% Zinkborat, wobei sich die Mengen-angaben auf die gesamte Formmassen beziehen, d. h. 20 Gew.-% erge-ben, in welcher Menge die Kombination in der Formmasse vorliegt (Exo-lit® OP 1312 von Clariant)
- Komponente G:: Glasfasern (OCF 1110 mit einem mittleren Durchmesser von 10 µm)
- Komponente H:: (Antioxidant 1098 von Great Lakes)
- Schmiermittel:: Aluminiumstearat (Alugel® 30 DF von Bärlocher)

Die Zusammensetzungen der Vergleichsformmasse V1, die kein Cyclophosphazen enthält, und der erfindungsgemäßen Formmassen der Beispiele 2, 3 und 4 sind in der nachfolgenden Tabelle 1 zusammengefasst.

**Tabelle 1**

| **Beispiel** | **1 [%]** | **2 [%]** | **3 [%]** | **4 [%]** |
|---|---|---|---|---|
| **Ultramid A24E** | 54,45 | 51,95 | 49,45 | 46,95 |
| **GF OCF 1110** | 25,00 | 25,00 | 25,00 | 25,00 |
| **Exolit OP1312** | 20,00 | 20,00 | 20,00 | 20,00 |
| **AL-stearat Alugel 30** DF | 0,20 | 0,20 | 0,20 | 0,20 |
| **Antioxidans 98 Granulat** | 0,35 | 0,35 | 0,35 | 0,35 |
| **FP-110** | | 2,50 | 5,00 | 7,50 |

Die Compoundierung erfolgte auf einem Extruder ZSK25 F41 bei einer Schneckengeschwindigkeit von 370 min⁻¹, einem Durchsatz von 28 kg/h, unter Anlegen eines Drucks von 200 mbar abs. Der Extruder wurde bei einer Temperatur von 280°C betrieben.

Probekörper für Brennversuche nach UL94 wurden wie in EP-A-2 100 919 beschrieben, hergestellt. Es wurden Formkörper mit einer Dicke von 0,4 mm und 0,8 mm hergestellt.

Die mechanischen Eigenschaften der Formkörper wurden nach folgenden Standards bestimmt:
Zug-E-Modul geprüft nach DIN EN ISO 527-1/-2
Bruchspannung geprüft mit 5 mm/min nach DIN EN ISO 527-1/-2
Bruchdehnung geprüft mit 5 mm/min nach DIN EN ISO 527-1/-2
Charpy Schlagzähigkeit geprüft bei 23°C nach DIN EN ISO 179

Die Ergebnisse der mechanischen Untersuchungen und der Brennversuche sind in der nachstehenden Tabelle 2 zusammengefasst. Dabei wurden an den beiden unterschiedlichen Dicken 0,4 mm und 0,8 mm Brandversuche bei 2d, 23°C und 7d 70°C durchgeführt. Die Ergebnisse sind in der nachstehenden Tabelle 2 zusammengefasst.

**Tabelle 2**

| **Beispiel** | **1 [%]** | **2 [%]** | **3 [%]** | **4 [%]** |
|---|---|---|---|---|
| **Fülldruck UL94 0,4mm [bar]** | 1127,00 | 1053,00 | 995,90 | 943,40 |
| **E-Modul [MPa]** | 9530,00 | 8672,00 | 8616,00 | / |
| **Bruchspannung (ó_B) [MPa]** | 139,65 | 128,40 | 125,12 | / |
| **Bruchdehnung (ε_B) [MPa]** | 2,77 | 2,94 | 3,00 | / |
| **Charpy ung. 23°C [kJ/m²]** | 61,00 | 59,80 | 62,00 | / |
| **UL94 0,4 mm (2d, 23°C)** | 1 | 2 | 3 | 4 |
| **Gesamtnachbrenndauer** | 48,6 | 27,2 | 20,1 | 18,1 |
| **Entzündung Bodenwatte** | 2 | 1 | 0 | 0 |
| **Nachbrenndauer > 30sek.** | 0 | 0 | 0 | 0 |
| **UL 94-Einstufung** | V2 | V2 | V0 | V0 |
| | | | | |
| **UL94 0,4 mm (7d, 70°C)** | 1 | 2 | 3 | 4 |
| **Gesamtnachbrenndauer** | 33,7 | 48,6 | 26,2 | 18,3 |
| **Entzündung Bodenwatte** | 3 | 0 | 0 | 0 |
| **Nachbrenndauer > 30sek.** | 0 | 0 | 0 | 0 |
| **UL 94-Einstufung** | V2 | V0 | V0 | V0 |
| **Fülldruck UL94 0,8 mm [bar]** | 637,7 | 573,2 | 484,8 | 298,5 |
| **UL94 0,8 mm (2d, 23°C)** | 1 | 2 | 3 | 4 |
| **Gesamtnachbrenndauer** | 27,1 | 21,5 | 18,3 | 16,9 |
| **Entzündung Bodenwatte** | 0 | 0 | 0 | 0 |
| **Nachbrenndauer > 30sek.** | 0 | 0 | 0 | 0 |
| **UL94-Einstufung** | V0 | V0 | V0 | V0 |
| | | | | |
| **UL94 0,8mm (7d, 70°C)** | 1 | 2 | 3 | 4 |
| **Gesamtnachbrenndauer** | 34,9 | 22,7 | 11,8 | 10,5 |
| **Entzündung Bodenwatte** | 0 | 0 | 0 | 0 |
| **Nachbrenndauer > 30sek.** | 0 | 0 | 0 | 0 |
| **UL 94-Einstufung** | V0 | V0 | V0 | V0 |

Wie aus den Ergebnissen zur UL 94-Einstufung hervorgeht, kann durch die Kombination von cyclischen Phenoxyphosphazenen mit Aluminiumdiethylphosphinat und Melaminpolyphosphat die UL 94-Einstufung, insbesondere für 0,4 mm (7d, 70 °C) deutlich verbessert werden.

Zu Vergleichszwecken wurde eine weitere Versuchsserie durchgeführt, bei der anstelle des Gemisches der Komponenten C/D/E nur Aluminiumdiethylphosphinat eingesetzt wurde (Exolit® OP 1230 von Clariant).

Die Komponenten A, B, G, H und das Schmiermittel blieben unverändert. Die Zusammensetzungen dieser Vergleichsformmassen V1 bis V4 sind in der nachfolgenden Tabelle 3 zusammengefasst:

**Tabelle 3**

| **Beispiel** | **V1** | **V2** | **V3** | **V4** |
|---|---|---|---|---|
| **Ultramid A24E** | 61,75 | 59,25 | 56,75 | 54,25 |
| **Glasfaser OCF DS 1110** | 25,00 | 25,00 | 25,00 | 25,00 |
| **Exolit OP1230** | 12,70 | 12,70 | 12,70 | 12,70 |
| **Antioxidans 1098** | 0,35 | 0,35 | 0,35 | 0,35 |
| **Alugel 30 DF** | 0,20 | 0,20 | 0,20 | 0,20 |
| **Rabitle FP-110** | | 2,50 | 5,00 | 7,50 |

Die Compoundierung erfolgte wie für die Zusammensetzung in Tabelle 1 beschrieben. Auch die Herstellung der Probekörper für die Brennversuche und die Bestimmung der mechanischen Eigenschaften erfolgte wie vorstehend beschrieben.

Die Ergebnisse der mechanischen Untersuchungen und der Brennversuche sind in der nachstehenden Tabelle 4 zusammengefasst. Dabei wurden an den beiden unterschiedlichen Dicken 0,4 mm und 0,8 mm Brandversuche bei 2d, 23 °C und 7d, 70 °C durchgeführt.

**Tabelle 4**

| **Beispiel** | **V1** | **V2** | **V3** | **V4** |
|---|---|---|---|---|
| **MVR 275 °C 5 kg [cm³/10 min]** | **85,6** | **106** | **107** | **121** |
| **E-Modul [MPa]** | 8702 | 8068 | 7679 | 7512 |
| **Bruchspannung (ó_B) [MPa]** | 146,2 | 137,4 | 132,3 | 127,3 |
| **Bruchdehnung (ε_B) [MPa]** | 3,36 | 3,37 | 3,35 | 3,29 |
| **Charpy ung. 23°C [kJ/m²]** | 69 | 69,9 | 70,9 | 71,1 |
| **UL94 0,4 mm (2d, 23°C)** | | | | |
| **Einstufung** | V2 | V2 | V2 | V1 |
| **Gesamtnachbrenndauer [s]** | 45 | 55 | 60 | 61 |
| **Gesamtbrenndauer > 30 sek.** | 0 | 0 | 0 | 0 |
| **Bodenwatte entz.** | 4 | 2 | 1 | 0 |

| **Beispiel** | **V1** | **V2** | **V3** | **V4** |
|---|---|---|---|---|
| | | | | |
| **UL94 0,4 mm (7d, 70°C)** | | | | |
| **Einstufung** | V-- | V2 | V2 | V1 |
| **Gesamtnachbrenndauer [s]** | 34 | 42 | 57 | 74 |
| **Gesamtbrenndauer > 30 sek.** | 0 | 0 | 0 | 0 |
| **Bodenwatte entz.** | 7 | 3 | 1 | 0 |
| **UL94 0,8 mm (2d, 23°C)** | | | | |
| **Einstufung** | V-- | V-- | V-- | V2 |
| **Gesamtnachbrenndauer [s]** | >147 | >157 | >142 | 133 |
| **Gesamtbrenndauer > 30 sek.** | 2 | 1 | 1 | 0 |
| **Bodenwatte entz.** | 0 | 0 | 0 | 0 |
| **Brandverhalten** | - | - | - | - |
| | | | | |
| **UL94 0,8mm (7d, 70°C)** | 1 | 2 | 3 | 4 |
| **Einstufung** | V-- | V-- | V1 | V-- |
| **Gesamtnachbrenndauer [s]** | >147 | >157 | 133 | >115 |
| **Gesamtbrenndauer > 30 sek.** | 3 | 1 | 0 | 1 |
| **Bodenwatte entz.** | 0 | 0 | 0 | 0 |

Die Bezeichnung "V--" gibt ein Nicht-Bestehen des UL94-Flammschutztests an; die Brenndauer liegt bei über 30 Sekunden.

## Patentansprüche

1. Thermoplastische Formmasse, bestehend aus
a) 45 bis 87 Gew.-% mindestens eines aliphatischen Polyamids oder Copolyamids als Komponente A,
b) 2 bis 10 Gew.-% mindestens eines cyclischen Phenoxyphosphazens mit mindestens 3 Phenoxyphosphazen-Einheiten als Komponente B,
c) 8 bis 17 Gew.-% mindestens eines (Di)phosphinatsalzes als Komponente C,
d) 1 bis 15 Gew.-% Melaminpolyphosphat als Komponente D,
e) 0,1 bis 5 Gew.-% Zinkborat als Komponente E,
f) 0 bis 20 Gew.-% mindestens eines Schlagzäh-modifizierenden Polymers als Komponente F,
g) 0 bis 50 Gew.-% Glasfasern als Komponente G,
h) 0 bis 30 Gew.-% weitere Zusatzstoffe als Komponente H,
wobei die Gesamtmenge der Komponenten A bis H 100 Gew.-% ergibt.

2. Thermoplastische Formmasse nach Anspruch 1, **dadurch gekennzeichnet, dass** Komponente A Polyamid-6, Polyamid-66 oder ein Copolyamid oder Blend davon ist.

3. Thermoplastische Formmasse nach Anspruch 1 oder 2, **dadurch gekennzeichnet, dass** Komponente B ein Gemisch aus cyclischen Phenoxyphosphazenen mit 3 und 4 Phenoxyphosphazen-Einheiten ist.

4. Thermoplastische Formmasse nach einem der Ansprüche 1 bis 3, **dadurch gekennzeichnet, dass** als Komponente G 5 bis 50 Gew.-% Glasfasern vorliegen.

5. Thermoplastische Formmasse nach einem der Ansprüche 1 bis 4, **dadurch gekennzeichnet, dass** als Komponente F Copolymerisate von Ethylen mit Acrylaten, Acrylsäure und/oder Maleinsäureanhydrid eingesetzt werden.

6. Thermoplastische Formmasse nach einem der Ansprüche 1 bis 5, **dadurch gekennzeichnet, dass** als Komponente C mindestens ein Aluminiumdialkylphosphinat eingesetzt wird.

7. Thermoplastische Formmasse nach einem der Ansprüche 1 bis 6, **dadurch gekennzeichnet, dass** die Gesamtmenge der Komponenten B bis E 10 bis 40 Gew.-% beträgt.

8. Verfahren zur Herstellung von thermoplastischen Formmassen nach einem der Ansprüche 1 bis 7 durch Vermischen der Komponenten A bis H.

9. Verwendung einer thermoplastischen Formmasse nach einem der Ansprüche 1 bis 8 zur Herstellung von Formkörpern, Fasern oder Folien.

10. Formkörper, Fasern oder Folien aus einer thermoplastischen Formmasse nach einem der Ansprüche 1 bis 7.

## Claims

1. A thermoplastic molding composition composed of
a) from 45 to 87% by weight of at least one aliphatic polyamide or copolyamide, as component A,
b) from 2 to 10% by weight of at least one cyclic phenoxyphosphazene having at least 3 phenoxyphosphazene units, as component B,
c) from 8 to 17% by weight of at least one (di)phosphinate salt, as component C,
d) from 1 to 15% by weight of melamine polyphosphate, as component D,
e)from 0.1 to 5% by weight of borate, as component E,
f) from 0 to 20% by weight of at least one impact-modifying polymer, as component F,
g) from 0 to 50% by weight of glass fibers, as component G, and
h)from 0 to 30% by weight of further additives, as component H,
where the total amount of components A to H gives 100% by weight.

2. The thermoplastic molding composition according to claim 1, wherein component A is nylon-6, nylon-6,6, or a copolyamide or blend thereof.

3. The thermoplastic molding composition according to claim 1 or 2, wherein component B is a mixture made of cyclic phenoxyphosphazenes having 3 and 4 phenoxyphosphazene units.

4. The thermoplastic molding composition according to any of claims 1 to 3, wherein from 5 to 50% by weight of glass fibers are present, as component G.

5. The thermoplastic molding composition according to any of claims 1 to 4, wherein, as component F, copolymers of ethylene with acrylates, acrylic acid, and/or maleic anhydride are used.

6. The thermoplastic molding composition according to any of claims 1 to 5, wherein at least one aluminum dialkylphosphinate is used as component C.

7. The thermoplastic molding composition according to any of claims 1 to 6, wherein the total amount of components B to E is from 10 to 40% by weight.

8. A process for producing thermoplastic molding compositions according to any of claims 1 to 7 via mixing of components A to H.

9. The use of a thermoplastic molding composition according to any of claims 1 to 8 for producing moldings, fibers, or foils.

10. A molding, fiber, or foil made of a thermoplastic molding composition according to any of claims 1 to 7.

## Revendications

1. Matériau de moulage thermoplastique, constitué par :
a) 45 à 87 % en poids d'au moins un polyamide ou copolyamide aliphatique en tant que composant A,
b) 2 à 10 % en poids d'au moins un phénoxyphosphazène cyclique contenant au moins 3 unités phénoxyphosphazène en tant que composant B,
c) 8 à 17 % en poids d'au moins un sel de (di)phosphinate en tant que composant C,
d) 1 à 15 % en poids de polyphosphate de mélamine en tant que composant D,
e) 0,1 à 5 % en poids de borate de zinc en tant que composant E,
f) 0 à 20 % en poids d'au moins un polymère modifiant la résistance aux impacts en tant que composant F,
g) 0 à 50 % en poids de fibres de verre en tant que composant G,
h) 0 à 30 % en poids d'additifs supplémentaires en tant que composant H,
la quantité totale des composants A à H étant de 100 % en poids.

2. Matériau de moulage thermoplastique selon la revendication 1, **caractérisé en ce que** le composant A est le polyamide 6, le polyamide 66 ou un copolyamide ou mélange de ceux-ci.

3. Matériau de moulage thermoplastique selon la revendication 1 ou 2, **caractérisé en ce que** le composant B est un mélange de phénoxyphosphazènes cycliques contenant 3 et 4 unités phénoxyphosphazène.

4. Matériau de moulage thermoplastique selon l'une quelconque des revendications 1 à 3, **caractérisé en ce que** 5 à 50 % en poids de fibres de verre sont présentes en tant que composant G.

5. Matériau de moulage thermoplastique selon l'une quelconque des revendications 1 à 4, **caractérisé en ce que** des copolymères d'éthylène avec des acrylates, de l'acide acrylique et/ou de l'anhydride de l'acide maléique sont utilisés en tant que composant F.

6. Matériau de moulage thermoplastique selon l'une quelconque des revendications 1 à 5, **caractérisé en ce qu'**au moins un dialkylphosphinate d'aluminium est utilisé en tant que composant C.

7. Matériau de moulage thermoplastique selon l'une quelconque des revendications 1 à 6, **caractérisé en ce que** la quantité totale des composants B à E est de 10 à 40 % en poids.

8. Procédé de fabrication de matériaux de moulage thermoplastique selon l'une quelconque des revendications 1 à 7 par mélange des composants A à H.

9. Utilisation d'un matériau de moulage thermoplastique selon l'une quelconque des revendications 1 à 8 pour la fabrication de corps moulés, de fibres ou de films.

10. Corps moulés, fibres ou films à base d'un matériau de moulage thermoplastique selon l'une quelconque des revendications 1 à 7.
